# FASCICULE DE BREVET EUROPEEN

(11) **EP 2 873 916 B1**
(45) Date de publication et mention de la délivrance du brevet: **20.07.2016**
(21) Numéro de dépôt: 13192630.5
(22) Date de dépôt: 13.11.2013
(51) Int. Cl.: F22B 1/00, F22B 21/02, F22B 37/26

(54) **Procédé et dispositif pour prévenir l'assèchement dans une chaudière de centrale solaire à concentration de type tour**
Verfahren und Vorrichtung zur Verhinderung einer Austrocknung in einem Heizkessel eines solarthermischen Kraftwerks vom Typ Turm
Method and device for preventing the emptying of a boiler of a concentrating solar power plant with a tower

(43) Date de publication de la demande: 20.05.2015
(73) Titulaire: Cockerill Maintenance & Ingénierie S.A., 4100 Seraing (BE)
(72) Inventeur: Dethier, Alfred, B-4140 SPRIMONT (BE)
(74) Mandataire: Pronovem

(56) Documents cités:
- WO-A1-2012/148656
- US-A1- 2010 236 239

## Description

### Objet de l'invention

La présente invention se rapporte au domaine technique des chaudières à haute puissance, en particulier pour des puissances dépassant largement les 100 MW, avec une pression de vapeur de près de 200 bar et une température de vapeur de près de 600 °C.

En particulier, l'invention se rapporte au domaine des centrales solaires à concentration, à cycle vapeur simple, comprenant un récepteur solaire ne présentant qu'un évaporateur et un surchauffeur (sans resurchauffeur).

### Arrière-plan technologique et état de la technique

On connaît la centrale solaire à concentration du type tour, dans laquelle le rayonnement solaire est réfléchi par une série de miroirs, dits héliostats, vers un récepteur solaire central qui transforme l'énergie du rayonnement solaire en un fluide chaud qui pourra être utilisé pour la production d'électricité.

Les héliostats sont pourvus de deux mécanismes de rotation permettant de suivre le soleil et de toujours renvoyer le flux solaire vers un point donné, quel que soit l'heure du jour et la saison en cours.

Le récepteur solaire est installé au sommet d'une tour afin de recevoir le rayonnement solaire de tous les héliostats sans qu'un héliostat donné ne gêne la réflexion de flux d'un héliostat voisin.

Le fluide chaud généré dans le récepteur solaire peut être de la vapeur à haute pression et haute température générée à partir d'eau d'alimentation. La vapeur peut alors être utilisée directement dans une turbine à vapeur entraînant un générateur d'électricité.

Une centrale solaire de ce type a un coût d'installation relativement élevé et toutes les solutions sont envisagées afin de réduire ce coût.

Parmi les solutions considérées, l'augmentation de puissance est un facteur important par effet d'échelle.

Une autre solution est l'augmentation du rendement de cycle : quand le rendement augmente, le nombre d'héliostats peut être réduit pour une même puissance de sortie, et donc la hauteur de la tour réduite et ainsi de suite. Le rendement d'un cycle vapeur augmente quand la pression du cycle et la température de vapeur augmentent.

Les puissances aujourd'hui considérées dépassent très largement les 100 MW, avec une pression de vapeur de près de 200 bar et une température de vapeur de près de 600 °C. Avec ces niveaux de performances, le récepteur solaire peut comprendre seulement un évaporateur et un surchauffeur : la resurchauffe peut donc avantageusement être évitée et partant ses coûts associés.

Le récepteur solaire est constitué de parois de tubes recevant les flux solaires des héliostats et transmettant la chaleur vers l'eau et/ou la vapeur contenue dans les tubes. Deux échangeurs distincts forment le récepteur solaire : l'évaporateur, transformant l'eau d'alimentation en vapeur saturée et le surchauffeur, augmentant la température de vapeur saturée jusqu'à la valeur voulue.

Entre les deux échangeurs se trouve le ballon, un réservoir très important d'une chaudière. Le ballon alimente l'évaporateur avec son eau, via un système de pompage. En effet, à ces hautes pressions, une circulation naturelle n'est plus possible, la différence de densité entre l'eau et la vapeur étant trop faible. Il faut en plus assurer un taux de circulation suffisant afin d'éviter l'encrassement de l'évaporateur par les sels contenus dans l'eau mais aussi afin d'éviter l'assèchement de la surface interne du tube.

L'assèchement de la surface interne du tube *(Dry-out)* est aussi une donnée importante d'un évaporateur : s'il se produit, le coefficient d'échange entre l'eau ou le mélange eau-vapeur et les tubes diminue brutalement, le tube n'est plus refroidi et ne peut plus évacuer la chaleur reçue sous forme de rayonnement. Une surchauffe apparaît, qui peut conduire à la destruction du tube. L'effet existe également suivant certains régimes d'évaporation appelés DNB (*Departure from nucleate boiling*).

Le ballon reçoit l'eau d'alimentation d'un débit égal au débit de la vapeur produite par l'évaporateur et qui est exportée au départ du ballon. L'eau d'alimentation entrante est mélangée à l'eau saturée contenue dans le ballon.

Le ballon sépare l'eau de la vapeur provenant de l'évaporateur: l'eau recircule vers l'évaporateur et la vapeur est exportée, après séchage dans l'équipement prévu à cet effet à l'intérieur du ballon.

Dans la configuration décrite ci-dessus, l'eau envoyée vers l'évaporateur via le système de circulation est à la température de saturation. L'évaluation des flux critiques maximum admissibles conduit à une difficulté majeure concernant l'assèchement (Dry-Out/DNB) due à la très haute pression.

On trouve un arrangement de chaudière avec deux ballons connectés l'un à l'autre, par exemple superposés, dans un certain nombre de brevets, parfois très anciens, pour les raisons précisées dans ces documents.

Par exemple :
- dans le générateur de vapeur de FR 678 909, faciliter la séparation eau/vapeur afin d'exporter une vapeur sèche. Cette préoccupation est aussi rencontrée dans le document DE 285 489 ;
- dans la chaudière à tubes à double ballon du document GB 529,444, présenter de meilleures caractéristiques de circulation ;
- dans le générateur de vapeur à récupération de chaleur de WO 2012/148656 A1, réduire le diamètre et donc l'épaisseur du ballon, et augmenter la souplesse de fonctionnement (temps de démarrage plus court, température de fonctionnement de l'évaporateur atteinte plus rapidement) ;
- dans le générateur de vapeur à récupération de chaleur de WO 2012/129195 A2, également réduire le diamètre et donc l'épaisseur du ballon, et par conséquent le gradient de température au travers de sa paroi au démarrage, lequel augmente la fatigue thermique sur le ballon et à son tour provoque une usure de celui-ci sous forme de fissures. La réduction d'épaisseur de ballon permet aussi de réduire le coût de fabrication. Ces préoccupations se retrouvent également dans le document EP 1 526 331 A1.

Le document US 2010/0236239 A1 décrit un procédé et un générateur pour produire de la vapeur pour une centrale électrique à turbine utilisant le rayonnement solaire. Ce dernier est dirigé sur un récepteur solaire. Le récepteur solaire comporte une première section, qui présente une entrée d'eau d'alimentation et est agencé pour chauffer cette eau d'alimentation en entrée en vue de générer de la vapeur en utilisant le rayonnement solaire dirigé. L'eau d'alimentation s'écoule à travers un récipient d'eau d'alimentation pour servir d'entrée d'eau d'alimentation à l'entrée de la première section de récepteur. L'eau est séparée de la vapeur dans un récipient de séparation de vapeur, qui est en communication fluidique avec une sortie de la première section du récepteur. L'entrée d'eau d'alimentation peut être préchauffée de manière sélective par une source de préchauffage autre que l'énergie solaire, notamment de préchauffage électrique, en réponse aux conditions de fonctionnement du système, aux horaires d'ensoleillement ou au tarif horaire de l'énergie électrique. Une pompe de circulation forcée permet au fluide de traverser le préchauffeur. Le flux solaire incident sur le récepteur solaire est au plus dans l'intervalle 130-230 kW/m² en mode solaire maximal. De plus, la température atteinte par la vapeur surchauffée est de 540-560°C, à une pression se trouvant dans l'intervalle de 100-140 bar. Ces conditions de fonctionnement sont trop basses pour faire apparaître le phénomène d'assèchement des tubes de génération de vapeur. Ce document n'enseigne aucune solution dans le cas où le générateur de vapeur doit faire face aux difficultés liées à la très haute pression (de 180 bar à plus de 200 bar).

Dans aucun cas il n'est fait mention du problème de l'assèchement (Dry-Out/DNB). Dans tous les cas de figure, les chaudières en objet de ces brevets travaillent en effet en pression beaucoup plus faible et avec des flux thermiques beaucoup plus faibles que dans le cas de figure de la présente invention, et donc sans aucun risque d'assèchement.

### Buts de l'invention

La présente invention a pour but de proposer une solution qui permette de s'affranchir des problèmes d'assèchement et de surchauffe susceptibles de survenir dans les évaporateurs de chaudières à haute pression.

En particulier, l'invention vise à prévenir ces problèmes dans le cas des chaudières pour centrales solaires à concentration.

L'invention vise également à fournir une chaudière pour hautes pressions et températures avec une souplesse de fonctionnement améliorée et un coût réduit.

L'invention vise encore à fournir une chaudière à double ballon présentant une utilisation et un arrangement originaux.

### Principaux éléments caractéristiques de l'invention

Un premier aspect de la présente invention se rapporte à un procédé pour générer de la vapeur à haute pression c'est-à-dire à une pression de plus de 160 bar, de préférence d'environ 200 bar et à haute température, c'est-à-dire à une température d'environ 600°C au surchauffeur, au moyen d'un générateur de vapeur industriel à récepteur solaire admettant un flux incident de l'ordre de 600 kW/m² selon la revendication 1. Ledit générateur possède une puissance supérieure à 100 MW. Il comprend un évaporateur suivi d'un surchauffeur, un premier ballon, dit ballon de séparation, situé entre l'évaporateur et le surchauffeur, étant superposé verticalement à un second ballon, dit ballon de mélange, le ballon de séparation étant pourvu d'une sortie pour envoyer la vapeur saturée vers le surchauffeur et le ballon de mélange étant pourvu d'une entrée pour l'arrivée d'eau d'alimentation et étant raccordé à un conduit de retour d'eau vers l'évaporateur, ledit conduit étant pourvu d'une pompe de circulation, le ballon de séparation et le ballon de mélange étant en communication au moyen d'au moins un conduit de liaison. Ledit procédé comporte au moins les étapes successives suivantes :
- un mélange eau-vapeur est généré dans l'évaporateur par transfert de chaleur provenant du flux solaire incident sur l'évaporateur ;
- le mélange eau-vapeur est séparé en eau saturée et en vapeur saturée dans le ballon de séparation, la vapeur saturée ayant une pression comprise entre 160 et 200 bar et une température comprise entre 347 et 366°C ;
- l'eau d'alimentation est injectée dans le ballon mélangeur où elle est mélangée avec l'eau saturée provenant du ballon de séparation, l'eau mélangée retournant ensuite vers l'évaporateur par le conduit de retour muni de la pompe de circulation,
de sorte que la température de l'eau mélangée entrant dans l'évaporateur soit inférieure à la température de vapeur saturée, d'une valeur comprise entre 5 et 15°C.

Selon une forme d'exécution préférée de l'invention, la température de l'eau mélangée entrant dans l'évaporateur est inférieure à la température de vapeur saturée, d'une valeur comprise entre 5 et 10°C.

Un second aspect de la présente invention se rapporte à un générateur selon la revendication 3. Il s'agit d'un générateur de vapeur industriel à récepteur solaire admettant un flux solaire incident de l'ordre de 600 kW/m², ledit générateur étant de puissance supérieure à 100 MW, à cycle de vapeur simple, en circulation assistée à une pression de plus de 160 bar, de préférence de plus de 180 bar et de préférence encore d'environ 200 bar et à une température d'environ 600°C au surchauffeur, comprenant :
- un récepteur solaire sous forme d'un évaporateur pour la génération d'un mélange eau-vapeur, suivi d'un surchauffeur pour l'augmentation de température de la vapeur saturée,
- un premier ballon, dit ballon de séparation, situé entre l'évaporateur et le surchauffeur, pour la séparation de la vapeur saturée et de l'eau saturée, le ballon de séparation étant pourvu d'une sortie pour envoyer la vapeur saturée à une température comprise entre 347 et 366°C vers le surchauffeur,
- un second ballon, dit ballon de mélange, auquel le ballon de séparation est superposé verticalement, le ballon de mélange étant pourvu d'une entrée pour l'arrivée d'eau d'alimentation à une température sensiblement inférieure à la température de l'eau saturée et étant raccordé à un conduit de retour d'eau vers l'évaporateur, ledit conduit étant pourvu d'une pompe de circulation, le ballon de séparation et le ballon de mélange étant en communication au moyen d'au moins un conduit de liaison, afin de mélanger l'eau saturée provenant du ballon de séparation à l'eau d'alimentation injectée dans le ballon de mélange, de sorte que l'eau ainsi mélangée envoyée à l'entrée de l'évaporateur soit sous-refroidie, c'est-à-dire à une température inférieure de quelques degrés à la température de vapeur saturée.

### Brève description des figures

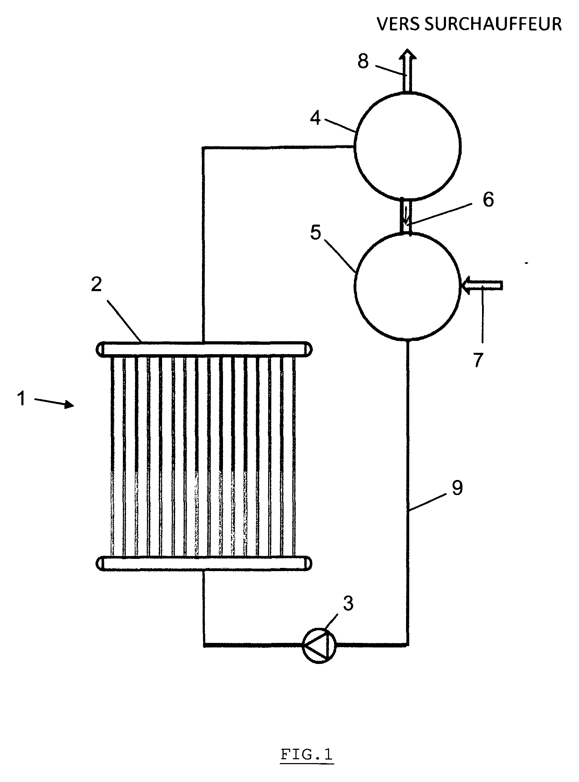

La figure 1 représente schématiquement le récepteur solaire à génération de vapeur directe selon la présente invention.

### Description de formes d'exécution préférées de l'invention

La présente invention propose un procédé pour prévenir l'assèchement (ou dry-out) dans une chaudière pour centrale solaire à concentration.

Le générateur de vapeur utilisé dans la présente invention permet de générer un cycle de vapeur simple à haute pression (environ 200 bar) et haute température (environ 600°C au surchauffeur). L'installation prise pour exemple ici délivre une puissance typique de 250 MW.

Le circuit 1 comporte un évaporateur 2, une pompe de circulation 3, un premier ballon 4, appelé ballon séparateur eau/vapeur muni d'une sortie 8 pour exporter de la vapeur saturée, un second ballon 5, appelé ballon de mélange muni d'une entrée d'eau d'alimentation 7. Le premier ballon 4 et le second ballon 5 sont superposés verticalement et interconnectés par un ou plusieurs tubes de liaison 6, permettant l'écoulement de l'eau saturée du ballon supérieur 4 vers le ballon inférieur 5. La vapeur saturée est à sa sortie du ballon séparateur 4 envoyée ensuite dans un surchauffeur où elle est surchauffée à 600°C avant d'être envoyée dans une turbine. La vapeur détendue et refroidie est ensuite transformée en eau dans le condenseur (non représenté). Cette eau étant ensuite renvoyée, via le ballon de mélange 5, vers l'évaporateur 2 par la pompe de circulation 3, ce qui boucle le cycle.

L'évaporateur comprend par exemple, dans le cas d'une centrale solaire à concentration de type tour (CSP Tower) un ou plusieurs échangeurs de chaleur aptes à transférer l'énergie du flux solaire incident, réfléchi par les héliostats, vers l'eau de la chaudière en vue de la production de vapeur.

Il est apparu qu'en utilisant un seul ballon pour la génération de vapeur saturée, les calculs théoriques, tenant compte des critères de dry-out et DNB, montrent qu'un flux thermique admissible sur les échangeurs de l'évaporateur serait très faible. Or, pour ce type d'installation, on doit pouvoir admettre un flux solaire incident par exemple de l'ordre de 600 kW/m².

L'inventeur a découvert que, pour pouvoir admettre un tel flux incident, il est indispensable de refroidir l'eau de circulation de seulement quelques degrés, typiquement 5 à 10 degrés.

Par exemple, pour une vapeur saturée de sortie à une pression de 195 bar et une température de 364°C, la température de l'eau de circulation devrait être de 359°C au lieu de 364°C pour satisfaire aux critères de dry-out/DNB. Ce sous-refroidissement de l'eau permet d'obtenir un taux de circulation réel de l'ordre de 10 au lieu de 6, valeur sans sous-refroidissement, et de satisfaire au critère de dry-out.

Selon la présente invention, le sous-refroidissement adéquat de l'eau de circulation est réalisé grâce à une configuration à deux ballons : le ballon supérieur 4 qui reçoit le mélange eau-vapeur en provenance de l'évaporateur et exporte la vapeur après séchage et le ballon inférieur 5, qui reçoit l'eau d'alimentation et envoie cette eau, mélangée avec l'eau saturée provenant du ballon supérieur 4, vers le système de circulation.

L'eau injectée dans le ballon de mélange (220 à 290°C dans l'exemple ci-dessus) est plus froide que l'eau de saturation (364°C dans l'exemple ci-dessus) et le mélange des deux donne une eau légèrement sous-refroidie, satisfaisant les critères d'assèchement (Dry-out - DNB).

L'utilisation d'un second ballon, pour mélanger l'eau saturée avec l'eau d'alimentation, permet d'obtenir le sous-refroidissement de l'eau de quelques degrés nécessaire (359°C au lieu de 364°C environ) et par conséquent d'augmenter le taux de circulation (10 en nominal, calculé suivant l'enthalpie), pour un flux solaire incident d'environ 600 kW/m².

### Liste des symboles de référence

- 1: circuit de chaudière
- 2: évaporateur
- 3: pompe de circulation
- 4: ballon séparateur eau/vapeur
- 5: ballon mélangeur
- 6: conduit de liaison
- 7: entrée d'eau d'alimentation
- 8: sortie de vapeur saturée
- 9: conduit de retour d'eau

## Revendications

1. Procédé pour générer un cycle de vapeur à une pression de plus de 160 bar, de préférence d'environ 200 bar et à une température d'environ 600°C, au moyen d'un générateur de vapeur industriel, de puissance supérieure à 100 MW, à récepteur solaire (1) admettant un flux solaire incident de l'ordre de 600 kW/m², ledit générateur comprenant un évaporateur (2) suivi d'un surchauffeur, un premier ballon (4), dit ballon de séparation, situé entre l'évaporateur (2) et le surchauffeur, étant superposé verticalement à un second ballon (5), dit ballon de mélange, le ballon de séparation (4) étant pourvu d'une sortie (8) pour envoyer la vapeur saturée vers le surchauffeur et le ballon de mélange (5) étant pourvu d'une entrée (7) pour l'arrivée d'eau d'alimentation et étant raccordé à un conduit (9) de retour d'eau vers l'évaporateur (2), ledit conduit (9) étant pourvu d'une pompe de circulation (3), le ballon de séparation (4) et le ballon de mélange (5) étant en communication au moyen d'au moins un conduit de liaison (6), ledit procédé comportant au moins les étapes successives suivantes :
- un mélange eau-vapeur est généré dans l'évaporateur (2) par transfert de chaleur provenant du flux solaire incident sur l'évaporateur (2) ;
- le mélange eau-vapeur est séparé en eau saturée et en vapeur saturée dans le ballon de séparation (4), la vapeur saturée ayant une pression comprise entre 160 et 200 bar et une température comprise entre 347 et 366°C ;
- l'eau d'alimentation est injectée dans le ballon mélangeur (5) où elle est mélangée avec l'eau saturée provenant du ballon de séparation (4), l'eau mélangée retournant ensuite vers l'évaporateur (2) par le conduit (9) de retour muni de la pompe de circulation (3),
de sorte que la température de l'eau mélangée entrant dans l'évaporateur (2) soit inférieure à la température de vapeur saturée, d'une valeur comprise entre 5 et 15°C afin de satisfaire les critères d'assèchement de la surface interne du tube de l'évaporateur (2) pour ledit flux solaire incident.

2. Procédé selon la revendication 1, **caractérisé en ce que** la température de l'eau mélangée entrant dans l'évaporateur (2) est inférieure à la température de vapeur saturée, d'une valeur comprise entre 5 et 10°C.

3. Générateur de vapeur industriel à récepteur solaire admettant un flux solaire incident de l'ordre de 600 kW/m², ledit générateur étant de puissance supérieure à 100 MW, à cycle de vapeur simple, en circulation assistée, à une pression de plus de 160 bar, de préférence d'environ 200 bar et à une température d'environ 600°C, comprenant :
- un récepteur solaire (1) sous forme d'un évaporateur (2) pour la génération d'un mélange eau-vapeur, suivi d'un surchauffeur pour l'augmentation de température de la vapeur saturée,
- un premier ballon (4), dit ballon de séparation, situé entre l'évaporateur (2) et le surchauffeur, pour la séparation de la vapeur saturée et de l'eau saturée, le ballon de séparation (4) étant pourvu d'une sortie (8) pour envoyer la vapeur saturée à une température comprise entre 347 et 366°C vers le surchauffeur,
- un second ballon (5), dit ballon de mélange, auquel le ballon de séparation (4) est superposé verticalement, le ballon de mélange (5) étant pourvu d'une entrée (7) pour l'arrivée d'eau d'alimentation à une température sensiblement inférieure à la température de l'eau saturée et étant raccordé à un conduit (9) de retour d'eau vers l'évaporateur (2), ledit conduit (9) étant pourvu d'une pompe de circulation (3), le ballon de séparation (4) et le ballon de mélange (5) étant en communication au moyen d'au moins un conduit de liaison (6), afin de mélanger l'eau saturée provenant du ballon de séparation (4) à l'eau d'alimentation injectée dans le ballon de mélange (5), de sorte que l'eau ainsi mélangée envoyée à l'entrée de l'évaporateur (2) soit sous-refroidie, c'est-à-dire à une température inférieure d'une valeur comprise entre 5 et 15°C à la température de vapeur saturée afin de satisfaire les critères d'assèchement de la surface interne du tube de l'évaporateur (2) pour ledit flux salaire incident.

## Patentansprüche

1. Verfahren zum Erzeugen eines Dampfzyklus mit einem Druck von über 160 bar, vorzugsweise von zirka 200 bar, und mit einer Temperatur von zirka 600 °C mit einem industriellen Dampferzeuger mit einer Leistung von über 100 MW, mit Solarempfänger (1), der eine einfallende Solarströmung in der Größenordnung von 600 kW/m² einlässt, wobei der Erzeuger einen Verdampfer (2) umfasst, gefolgt von einem Überhitzer, ein als Abscheider bezeichnetes erstes Gefäß (4), das sich zwischen dem Verdampfer (2) und dem Überhitzer befindet, wobei es vertikal über einem zweiten, als Mischgefäß bezeichnetem Gefäß (5) steht, wobei der Abscheider (4) mit einem Ausgang (8) ausgestattet ist, um den gesättigten Dampf an den Überhitzer zu schicken, und das Mischgefäß (5) mit einem Eingang (7) für die Ankunft von Versorgungswasser ausgestattet ist und mit einer Wasserrückflussleitung (9) zum Verdampfer (2) verbunden ist, wobei die Leitung (9) mit einer Zirkulationspumpe (3) ausgestattet ist, wobei der Abscheider (4) und das Mischgefäß (5) mit Hilfe von mindestens einer Verbindungsleitung (6) in Kommunikation sind, wobei das Verfahren mindestens die folgenden aufeinanderfolgenden Schritte aufweist:
- Erzeugen eines Wasser-Dampf-Gemischs im Verdampfer (2) durch Übertragung von Wärme von der auf den Verdampfer (2) einfallenden Solarströmung;
- Trennen des Wasser-Dampf-Gemischs in gesättigtes Wasser und in gesättigten Dampf im Abscheider (4), wobei der gesättigte Dampf einen Druck zwischen 160 und 200 bar inklusive und eine Temperatur zwischen 347 und 366 °C inklusive hat,
- Einspeisen des Versorgungswassers in das Mischgefäß (5), wo es mit dem gesättigten Wasser aus dem Abscheider (4) gemischt wird, wobei das Mischwasser dann durch die mit der Zirkulationspumpe (3) ausgestattete Rückflussleitung (9) zum Verdampfer (2) zurückkehrt,
so dass die Temperatur des in den Verdampfer (2) eintretenden Mischwassers in einem Wert zwischen 5 und 15 °C inklusive niedriger ist als die Temperatur des gesättigten Dampfs, um die Austrocknungskriterien der inneren Oberfläche des Rohrs des Verdampfers (2) für die einfallende Solarströmung zu erfüllen.

2. Verfahren nach Anspruch 1, **dadurch gekennzeichnet, dass** die Temperatur des in den Verdampfer (2) eintretenden Mischwassers in einem Wert zwischen 5 und 10 °C inklusive niedriger als die Temperatur des gesättigten Dampfs ist.

3. Industrieller Dampferzeuger mit Solarempfänger, der eine einfallende Solarströmung in der Größenordnung von 600 kW/m² einlässt, wobei der Erzeuger eine Leistung über 100 MW hat, mit einfachem Dampfzyklus, mit unterstützter Zirkulation, bei einem Druck von über 160 bar, vorzugsweise von zirka 200 bar, und bei einer Temperatur von zirka 600 °C, umfassend:
- einen Solarempfänger (1) in Form eines Verdampfers (2) zum Erzeugen eines Wasser-Dampf-Gemischs, gefolgt von einem Überhitzer für die Erhöhung der Temperatur des gesättigten Dampfs,
- ein als Abscheider bezeichnetes erstes Gefäß (4), das sich zwischen dem Verdampfer (2) und dem Überhitzer befindet, zum Trennen des gesättigten Dampfs und des gesättigten Wassers, wobei der Abscheider (4) mit einem Ausgang (8) ausgestattet ist, um den gesättigten Dampf mit einer Temperatur zwischen 347 und 366 °C inklusive an den Überhitzer zu schicken,
- ein als Mischgefäß bezeichnetes zweites Gefäß (5), über dem der Abscheider (4) vertikal angeordnet ist, wobei das Mischgefäß (5) mit einem Eingang (7) für die Ankunft von Versorgungswasser mit einer Temperatur deutlich unter der Temperatur des gesättigten Wassers ausgestattet ist und mit einer Wasserrückflussleitung (9) zum Verdampfer (2) verbunden ist, wobei die Leitung (9) mit einer Zirkulationspumpe (3) ausgestattet ist, wobei der Abscheider (4) und das Mischgefäß (5) mit Hilfe von mindestens einer Verbindungsleitung (6) in Kommunikation sind, um das vom Abscheider (4) kommende gesättigte Wasser mit dem in das Mischgefäß (5) eingespeisten Versorgungswasser zu mischen, so dass das derart gemischte, zum Eingang des Verdampfers (2) geschickte Wasser unterkühlt wird, das heißt, auf eine Temperatur in einem Wert zwischen 5 und 15 °C inklusive niedriger als die Temperatur des gesättigten Dampfs, um die Austrocknungskriterien der inneren Oberfläche des Rohrs des Verdampfers (2) für die einfallende Solarströmung zu erfüllen.

## Claims

1. A method for generating a steam cycle at a pressure of more than 160 bars, preferably of about 200 bars, and at a temperature of about 600°C, using an industrial steam generator having a power of more than 100 MW, with a solar receiver (1) admitting an incident solar flux of about 600 kW/m², said generator comprising an evaporator (2) followed by a superheater, a first drum (4), called separator drum, situated between the evaporator (2) and the superheater, being vertically superimposed on a second drum (5), called mixing drum, the separator drum (4) being provided with an outlet (8) for sending the saturated steam toward the superheater and the mixing drum (5) being provided with an inlet (7) for the intake of feed water and being connected to a water return pipe (9) toward the evaporator (2), said pipe (9) being provided with a circulation pump (3), the separator drum (4) and the mixing drum (5) being in communication via at least one connecting pipe (6), said method comprising at least the following successive steps:
- a water-steam mixture is generated in the evaporator (2) by transferring heat from the incident solar flux onto the evaporator (2);
- the water-steam mixture is separated into saturated water and saturated steam in the separator drum (4), the saturated steam having a pressure comprised between 160 and 200 bars and a temperature comprised between 347 and 366°C;
- the feed water is injected into the mixing drum (5), where it is mixed with the saturated water from the separator drum (4), the mixed water next returning toward the evaporator (2) via the return pipe (9) provided with the circulation pump (3),
such that the temperature of the mixed water entering the evaporator (2) is below the saturated steam temperature, by a value comprised between 5 and 15°C to meet the criteria of drying of the inner surface of the tube of the evaporator (2) for said incident solar flux.

2. The method according to claim 1, **characterized in that** the temperature of the mixed water entering the evaporator (2) is below the saturated steam temperature, by a value comprised between 5 and 10°C.

3. An industrial steam generator with a solar receiver admitting an incident solar flux of about 600 kW/m², said generator having a power of more than 100 MW, with a single steam cycle, in assisted circulation at a pressure of more than 160 bars, preferably of more than 180 bars, and still more preferably of about 200 bars and at a temperature of about 600°C, comprising:
- a solar receiver (1) in the form of an evaporator (2) for generating a water-steam mixture, followed by a superheater for the temperature increase of the saturated steam,
- a first drum (4), called separator drum, situated between the evaporator (2) and the superheater, for separating the saturated steam and the saturated water, the separator drum (4) being provided with an outlet (8) to send saturated steam at a temperature comprised between 347 and 366°C toward the superheater,
- a second drum (5), called mixing drum, on which the separator drum (4) is vertically superimposed, the mixing drum (5) being provided with an inlet (7) for the intake of feed water at a temperature substantially lower
- than the temperature of the saturated water and being connected to a water return pipe (9) toward the evaporator (2), said pipe (9) being provided with a circulation pump (3), the separator drum (4) and the mixing drum (5) being in communication via at least one connecting pipe (6), so as to mix the saturated water coming from the separator drum (4) with the feed water injected into the mixing drum (5), such that the water thus mixed sent to the inlet of the evaporator (2) is sub-cooled, i.e., at a temperature of a value between 5 and 15 °C below the saturated steam temperature to meet the criteria of drying of the inner surface of the tube of the evaporator (2) for said incident solar flux.
